# EUROPÄISCHE PATENTSCHRIFT

(11) **EP 2 360 991 B1**
(45) Veröffentlichungstag und Bekanntmachung des Hinweises auf die Patenterteilung: **17.07.2013**
(21) Anmeldenummer: 10192522.0
(22) Anmeldetag: 25.11.2010
(51) Int. Cl.: H05B 33/08

(54) **Schaltung und Verfahren zur Ansteuerung eines Leuchtmittels**
Switch and method for controlling a light
Commutation et procédé de commande d'un moyen d'éclairage

(30) Priorität: 15.02.2010 DE 102010001919
(43) Veröffentlichungstag der Anmeldung: 24.08.2011
(73) Patentinhaber: OSRAM GmbH, 80807 München (DE)
(72) Erfinder: Dilger, Richard, 81549, München (DE)

(56) Entgegenhaltungen:
- WO-A1-2011/111005
- DE-B3-102005 011 503
- DE-U1-202008 013 638
- FR-A1- 2 573 257
- US-A1- 2009 315 477

## Beschreibung

Die Erfindung betrifft eine Schaltung zur Ansteuerung eines Leuchtmittels sowie ein entsprechendes Verfahren. Weiterhin wird eine Leuchte oder Lampe mit einer solchen Schaltung vorgeschlagen.

Bei bekannten Treibern zur Ansteuerung von LEDs ist parallel zum Ausgang ein Kondensator mit einer großen Kapazität (z.B. im Bereich von 1 mF bis 10 mF) angeordnet. Damit wird auch während einer inaktiven Phase des Treibers, also in der Nähe des Nulldurchgangs, für die LEDs ausreichend Energie zur Verfügung gestellt, so dass diese kaum wahrnehmbar flimmern.

Hierbei ist es jedoch von Nachteil, dass durch die Flussspannung der LEDs lediglich ein Teil der in dem Kondensator gespeicherten Energie genutzt werden kann und somit die benötigte Kapazität sehr groß ist.

DE 20 2008 013 638 U1 betrifft ein Niedervolt-Beleuchtungssystem und eine Regelschaltung zur Verwendung in einem Niedervolt-Beleuchtungssystem. Hierbei ist ein Dimmer vorgesehen, um einen Pegel der Betriebsspannung zu variieren. Die Regelschaltung steuert abhängig von dem Pegel der Betriebsspannung die Leuchtleistung einer LED-Leuchte unter Beibehaltung des Pegels der Leuchtenspannung.

DE 10 2005 011 503 B3 betrifft ein Verfahren zur gepulsten Ansteuerung von Leuchtmitteln, bei dem jeder Zeitblock zumindest zweimal innerhalb jeder Periode angeordnet ist und nicht alle gleichwertigen Zeitblöcke innerhalbe einer einzigen Periode unmittelbar aneinandergrenzend angeordnet sind.

Aus US 2009/0315477 A1 ist eine Dimmerschaltung bekannt, bei der ein Ausgangssignal mit einem veränderlichen Tastverhältnis konvertiert wird in ein Signal mit veränderlicher Amplitudenform, wobei die durchschnittliche Amplitude proportional ist zu dem Tastverhältnis des Eingangssignals.

Die Aufgabe der Erfindung besteht darin, eine alternative Lösung anzugeben, die insbesondere eine effiziente Helligkeitsregelung (Dimmung) eines Leuchtmittels erlaubt, wobei auch im helligkeitsgeregelten Zustand ein Flimmern für das menschliche Auge nicht wahrnehmbar ist. Dabei soll insbesondere die Kapazität des am Ausgang des Treibers eingesetzten Kondensators deutlich reduziert werden.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird eine Schaltung zur Ansteuerung eines Leuchtmittels vorgeschlagen,
- wobei die Schaltung ausgelegt ist, um einem Dimmer, insbesondere einem Phasenan- oder einem Phasenabschnittsdimmer, nachgeschaltet zu werden,
- bei der das Leuchtmittel mindestens ein Halbleiterleuchtelement, insbesondere mindestens eine Leuchtdiode, umfasst,
- umfassend eine Treiberschaltung mit einem Eingang und einem Ausgang, wobei der Ausgang der Treiberschaltung mit dem Leuchtmittel verbunden ist,
- umfassend eine Detektorschaltung, anhand derer abhängig von einem Eingangssignal der Treiberschaltung ein Kondensator mit dem Ausgang der Treiberschaltung oder mit dem Eingang der Treiberschaltung verbindbar ist,
- bei der der Kondensator (108) während einer Pause (P) des Eingangssignals der Treiberschaltung (104) für eine vorgegebene Zeitdauer (207) insbesondere um die Mitte der Pause mit dem Eingang der Treiberschaltung verbindbar ist,
- bei der der Eingang des Treibers (104) mit dem Ausgang eines Gleichrichters (103) verbunden ist und dem Gleichrichter (103) insbesondere ein Dimmer vorgeschaltet (102) ist.

Insbesondere kann es sich bei dem Kondensator um mindestens einen Kondensator handeln.

Diese Lösung ermöglicht eine Helligkeitsregelung (Dimmung) für mindestens ein Halbleiterleuchtelement, insbesondere für mindestens eine Leuchtdiode (LED) im Bereich einer Niederwechselspannung. Die Dimmung der LED kann vorzugsweise so erfolgen, dass das menschliche Auge kein Flimmern wahrnimmt. Weiterhin funktioniert die vorgeschlagene Lösung auch in Verbindung mit Phasenan- bzw. Phasenabschnittsdimmern.

Die vorgeschlagene Schaltung kann an elektronischen Transformatoren betrieben werden, da sie am Eingang ein weitgehend resistives Verhalten aufweisen kann. Auch ist von Vorteil, dass die vorgeschlagene Lösung den Einsatz eines um eine Größenordnung kleineren Kondensators erlaubt, der entsprechend deutlich weniger Bauraum beansprucht.

Eine Weiterbildung ist es, dass die Treiberschaltung einen Schaltregler oder einen Hochsetzer (Hochsetzsteller), insbesondere einen SEPIC-Wandler aufweist.

Insbesondere kann die Treiberschaltung einen Boost-Schaltregler umfassen.

Eine andere Weiterbildung ist es, dass die Detektorschaltung den Kondensator mit dem Ausgang der Treiberschaltung oder mit dem Eingang der Treiberschaltung mittels zweier steuerbarer elektronischer Schalter verbindet.

Insbesondere ist es eine Weiterbildung, dass der elektronische Schalter eines der folgenden Bauelemente aufweist:
- einen Halbleiterschalter,
- einen Transistor,
- einen Feldeffekttransistor,
- einen Mosfet,
- einen BiCMOS-Schalter,
- einen IGBT.

Auch ist es eine Weiterbildung, dass der Kondensator ein Keramik-Kondensator ist.

Solch ein Keramik-Kondensator erfordert deutlich weniger Bauraum als die Kondensatoren in herkömmlichen Lösungen.

Bei der Pause des Eingangssignals kann es sich um ein Eingangssignal handeln, das kleiner als ein vorgegebener Schwellwert ist. Beispielsweise kann eine Pause des Eingangssignals dann vorliegen, wenn ein Dimmer eine Phasenanschittsteuerung und/oder eine Phasenabschnittsteuerung durchführt und vorübergehend das Eingangssignal ausschaltet, um die Helligkeit des Leuchtmittels zu reduzieren.

Durch die Aktivierung während der Mitte der Pause bzw. während eines Zeitraums um die Mitte der Pause kann erreicht werden, dass die Länge der Pause deutlich verkürzt wird und die verbleibenden wesentlich kürzeren Pausen während der das Leuchtmittel nicht angesteuert wird (dunkel ist) vom menschlichen Auge nicht als Flimmern wahrgenommen werden.

Eine nächste Weiterbildung besteht darin, dass anhand der Detektorschaltung die Dauer der Pause ermittelbar ist.

Beispielsweise kann eine erstmalig auftretende Pause bestimmt werden (ggf. auch mehrere Pausen) und daraufhin kann eine entsprechende Ansteuerung der Schalter zur Verbindung des Kondensators mit dem Eingang des Treibers bzw. dem Ausgang des Treibers erfolgen.

Eine Ausgestaltung ist es, dass die Detektorschaltung eine Aussteuerung des Treibers ansteuert.

Hierzu kann die Detektorschaltung über eine Steuerleitung zu dem Treiber verfügen und die Aussteuerung, z.B. mittlere abgegebene Leistung oder Verstärkung des Treibers ansteuern oder einstellen. Hierdurch ist es möglich, dass die Detektorschaltung die mittlere von dem Treiber abgegebene Leistung nach unten korrigiert während der Dimmung, also während der Verkürzung der Pausen, bei denen der Kondensator zumindest zeitweise mit dem Eingang des Treibers verbunden wird.

Eine alternative Ausführungsform besteht darin, dass die Detektorschaltung die Aussteuerung des Treibers reduziert, wenn der Kondensator mit dem Eingang der Treiberschaltung verbunden ist.

Hierdurch kann die Helligkeit des Leuchtmittels reduziert werden und gleichzeitig wird verhindert, dass ein Flimmern des Leuchtmittels wahrnehmbar ist.

Insbesondere wird eine Wechselspannung über den Dimmer eingestellt, anhand des Gleichrichters in eine (pulsierende und/oder geglättete) Gleichspannung gewandelt und über den Treiber das Leuchtmittel entsprechend betrieben.

Auch ist es eine Ausgestaltung, dass das Leuchtmittel mindestens ein Halbleiterleuchtelement, insbesondere mindestens eine Leuchtdiode, umfasst.

Insbesondere kann das Leuchtmittel eine Serienschaltung aus mehreren Halbleiterleuchtelementen bzw. LEDs und/oder eine Parallelschaltung aus mehreren Halbleiterleuchtelementen bzw. LEDs aufweisen.

Die vorstehend genannte Aufgabe wird auch gelöst durch ein Verfahren zum Ansteuern mindestens eines Halbleiterleuchtelements über einen Phasenan- bzw. Phasenabschnittsdimmer,
- bei dem eine Treiberschaltung einen Eingang und einen Ausgang aufweist, wobei der Ausgang der Treiberschaltung mit dem Leuchtmittel verbunden ist,
- bei dem abhängig von einem Eingangssignal der Treiberschaltung ein Kondensator mit dem Ausgang der Treiberschaltung oder mit dem Eingang der Treiberschaltung verbunden wird,
- bei dem eine Pause des Eingangssignals der Treiberschaltung detektiert wird und
- bei dem zumindest vorübergehend während der Pause, insbesondere um die Mitte der Pause, der Kondensator mit dem Eingang der Treiberschaltung verbunden wird.

Insbesondere können entsprechend Schalter angesteuert werden, so dass der Kondensator wechselseitig entweder mit dem Eingang oder mit dem Ausgang des Treibers verbunden ist.

Auch wird die vorstehend genannte Aufgabe gelöst mittels einer Leuchte oder Lampe umfassend eine Schaltung wie hierin beschrieben.

Ausführungsbeispiele der Erfindung werden nachfolgend anhand der Zeichnungen dargestellt und erläutert.

Es zeigen:
- Fig.1: ein schematisches Blockschaltbild einer Schaltung zur Ansteuerung eines Leuchtmittels;
- Fig.2: symbolisch unterschiedliche zeitliche Verläufe von Spannungsverläufen an dem Ausgang des Gleichrichters bzw. an dem Eingang des Treibers.

Es wird eine Schaltungsanordnung vorgeschlagen mit einer Detektorschaltung zur Detektion einer geringen Eingangsspannung, d.h. es wird anhand der Detektorschaltung festgestellt, wann eine Eingangsspannung kleiner als ein vorgegebener Wert ist. Hierbei kann die Detektorschaltung analog als auch digital ausgeführt sein.

Die Schaltungsanordnung umfasst weiterhin einen Treiber, z.B. einen Hochsetzsteller oder Schaltregler, zur Ansteuerung mindestens eines Leuchtmittels, z.B. mindestens eines Halbleiterleuchtelements (z.B. mindestens einer LED). Insbesondere können mehrere LEDs in Reihe und/oder parallel geschaltet sein. Der Treiber kann ausgangsseitig einen Kondensator zur Glättung einer ungleichmäßigen Stromform des Treibers aufweisen.

Weiterhin ist am Ausgang des Treibers eine weitere (größere) Kapazität vorgesehen, die über die Detektorschaltung mittels zweier elektronischer Schalter, z.B. Transistoren, Mosfets, etc. ansteuerbar ist derart, dass diese Kapazität entweder mit dem Ausgang des Treibers oder mit dem Eingang des Treibers verbunden ist.

Beispielsweise kann die Umschaltung der Kapazität in einer Pause des an dem Treiber anliegenden Eingangssignals, also wenn keine Eingangsspannung anliegt, erfolgen. Vorzugsweise kann die Umschaltung in etwa in der Mitte oder in einem zeitlichen Bereich um die Mitte der Pause erfolgen.

Hierdurch kann die Pause, also der Zeitraum, in dem das Leuchtmittel nicht leuchtet, in etwa halbiert werden. Falls ein Leuchten mit geringer Helligkeit (starke Dimmung) gewünscht ist, liefert einen Phasenschnittsteuerung (Phasenan- und/oder Phasenabschnittsteuerung) bei herkömmlichen Dimmern eine Unterbrechung der Leuchtdauer, die wechselnden Abschnitte von aktiviertem und inaktivem Leuchtmittel nimmt das menschlichen Auge bei ausreichend langer Pause als Flimmern wahr. Durch die Umschaltung des Kondensators an den Eingang des Treibers in etwa in der Mitte der Unterbrechung liefert der Kondensator elektrische Energie (z.B. mitten) in der Pause an den Treiber, ein Flimmern des Leuchtmittels, z.B. der mindestens einen LED, bei in etwa der doppelten Frequenz ist von dem menschlichen Auge nicht mehr wahrnehmbar.

Somit kann die gleichgerichtete Netzfrequenz im Zustand der Helligkeitsregelung des Leuchtmittels z.B. verdoppelt werden: Die (pulsierende) gleichgerichtete Netzfrequenz weist z.B. eine Frequenz von 100 Hz bis 120 Hz und somit nach der Frequenzverdopplung 200 Hz bis 240 Hz auf. Derartig hochfrequentes Schalten der Leuchtmittel ist auch bei weitgehend verzögerungsfrei schaltenden Leuchtmitteln wie LEDs nicht von dem menschlichen Auge wahrnehmbar.

Eine Option besteht darin, dass die Detektorschaltung den Treiber ansteuert, so dass auch im helligkeitsreduzierten Betrieb (z.B. bei starker Dimmung) eine entsprechend mittlere Leistung des Treibers zurückgenommen wird. Hierdurch wird verhindert, dass die Rückführung der Energie des Kondensators an den Eingang des Treibers die Helligkeit des Leuchtmittels erhöht und somit der eigentlich aufgrund der Dimmung gewünschten Helligkeitsreduzierung entgegenwirkt. Somit kann abhängig von der Verbindung des Kondensators mit dem Eingang durch ein entsprechendes Ansteuersignal der Detektorschaltung auch die Ausgangsleistung des Treibers reduziert werden. Im Ergebnis wird zwar Leistung des Kondensators an den Eingang des Treibers zurückgeführt, der Treiber selbst wird aber entsprechend abgeregelt, so dass die mittlere Leistung abnimmt, d.h. das Leuchtmittel weniger hell leuchtet, aber aufgrund des hier erläuterten Effekts dennoch kein Flimmern wahrnehmbar ist.

Eine weitere Option ist es, dass die Detektorschaltung ein Verzögerungselement umfasst oder mit einem solchen (ggf. separat ausgeführten) Verzögerungselement verbunden ist. Anhand des Verzögerungselements kann erreicht werden, dass die Pause am Eingang des Treibers gezielt so genutzt wird, dass die Verbindung des Kondensators mit dem Eingang des Treibers zu einem vorgegebenen Zeitpunkt, z.B. für eine vorgegebene Zeitdauer, um die Mitte der Pause erfolgt. Hierzu kann die Detektorschaltung die Dauer der Pause bestimmen und anhand des Verzögerungselements kann der Kondensator für die entsprechende Zeitdauer um die Mitte der Pause mit dem Eingang des Treibers verbunden werden.

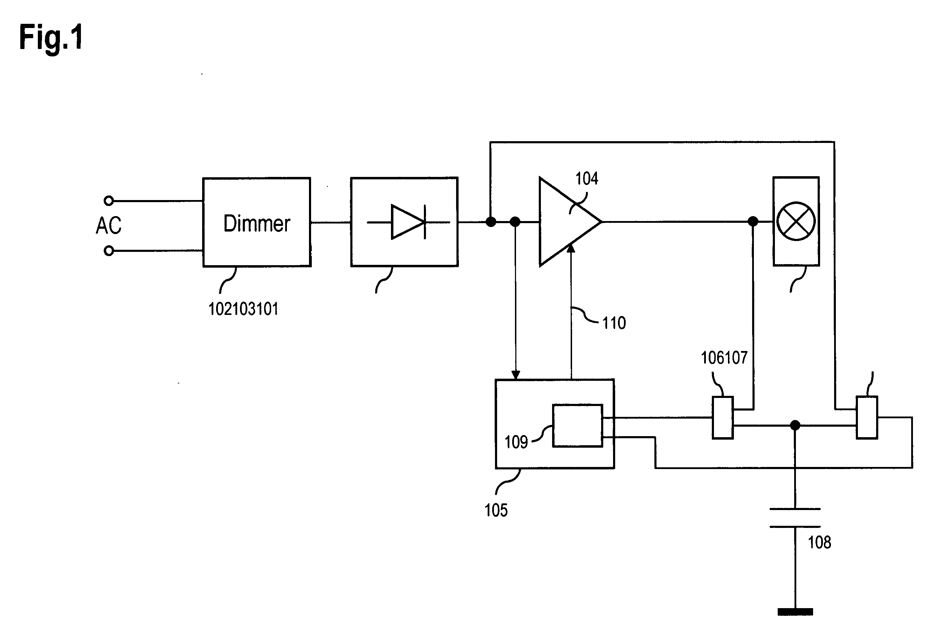

**Fig.1** zeigt ein schematisches Blockschaltbild einer Schaltung zur Ansteuerung eines Leuchtmittels 101, wobei das Leuchtmittel 101 vorzugsweise mindestens eine LED aufweist.

Eine Wechselspannung AC speist einen Dimmer 102, der über einen Gleichrichter 103 mit einem Treiber 104 verbunden ist. Bei dem Treiber 104 kann es sich um einen Hochsetzsteller, z.B. um einen SEPIC-Wandler, handeln. Das Leuchtmittel 101 wird über den Treiber 104 angesteuert.

Eine Detektorschaltung 105 umfasst optional ein Verzögerungselement 109. Ein Kondensator 108 ist abhängig von einem Schalter 106 mit dem Ausgang des Treibers 104 bzw. abhängig von einem Schalter 107 mit den Eingang des Treibers 104 verbunden. Die Schalter 106 und 107 werden von der Detektorschaltung 105, insbesondere von dem Verzögerungselement 109, angesteuert. Bei den Schaltern 106, 107 kann es sich um elektronische Schalter, z.B. Transistoren, Mosfets, IGBTs, BiCMOS-Schalter, Feldeffekttransistoren oder ähnliche Schalter handeln.

Die Detektorschaltung 105 ist mit dem Eingang des Treibers 104 verbunden und umfasst optional eine Steuerleitung 110 zur Ansteuerung des Treibers 104.

Abhängig von einer Höhe einer an dem Eingang des Treibers 104 detektierten Spannung kann somit die Detektorschaltung 105 über die Schalter 106, 107 den Kondensator 108 entweder mit dem Ausgang oder mit dem Eingang des Treibers 104 verbinden. Insbesondere kann mittels der Detektorschaltung 105 eine Pause, also eine Dauer einer Unterbrechung des Ansteuersignals des Treibers 104 detektiert werden und mittels der Verzögerungseinheit 109 kann abhängig von der Länge der Pause für eine vorgegebene Zeitdauer der Kondensator 108 über den Schalter 107 mit dem Eingang des Treibers 104 verbunden werden. Hierbei sei erwähnt, dass die Schalter 106, 107 insbesondere abwechselnd betrieben werden, d.h. dass entweder der Schalter 106 oder der Schalter 107 geschlossen ist.

Der Dimmer 102 kann z.B. eine Phasenanschnittsteuerung und/oder eine Phasenabschnittsteuerung aufweisen: Um die Helligkeit des Leuchtmittels 101 zu reduzieren, wird ein Teil der Phase des Wechselspannungssignals abgeschaltet.

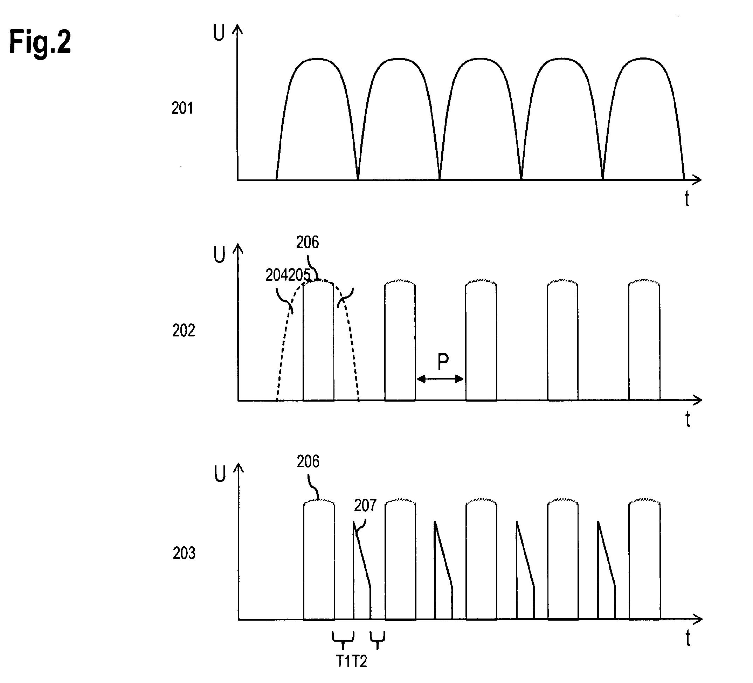

Fig.2 zeigt symbolisch unterschiedliche zeitliche Verläufe von Spannungsverläufen. Ein Spannungsverlauf 201 zeigt ein Ausgangssignal des Gleichrichters 103 ohne dass der Dimmer 102 die Helligkeit des Leuchtmittels 101 dimmen, d.h. vermindern, würde. Der Spannungsverlauf 201 entspricht einer (ungeglätteten) pulsierenden Gleichspannung.

Ein Spannungsverlauf 202 zeigt ein gedimmtes Spannungssignal am Ausgang des Gleichrichters 103, wobei ein ansteigender Teil der Phase 204 und ein abfallender Teil der Phase 205 von dem Dimmer 102 abgeschnitten wurde. Somit reduziert sich die Helligkeit des Leuchtmittels 101. Allerdings kommt es aufgrund der Phasensteuerung des Dimmers 102 zu Pausen P, bei denen keine Ansteuerung des Leuchtmittels 101 erfolgt. Durch den Wechsel von Ansteuerphasen 206 und Pausen P flimmert das Leuchtmittel 101 für das menschliche Auge wahrnehmbar.

Hierbei sei angemerkt, dass die hier erläuterte Lösung auch nur mit einer Phasenanschnittsteuerung oder nur mit einer Phasenabschnittsteuerung funktioniert. Dementsprechend wäre dann die in Fig.2 gezeigte Ansteuerphase 206 zusätzlich entweder um den Bereich 205 oder um den Bereich 204 zu ergänzen.

Ein Spannungsverlauf 203 zeigt die Ansteuerphasen 206 gemäß dem Spannungsverlauf 202, wobei in den Pausen P jetzt zusätzlich ein Spannungssignal 207 vorhanden ist. Dieses Spannungssignal 207 basiert auf der Aktivierung des Schalters 107 und leitet zumindest einen Teil der in dem Kondensator 108 gespeicherten elektrischen Ladung an den Eingang des Treibers 104. Die Unterbrechungen der Leuchtdauer reduzieren sich deutlich (siehe jeweils die Zeitdauern T1, T2 im Vergleich zur Pause P), das menschliche Auge kann kein Flimmern des Leuchtmittels 101 wahrnehmen.

Anhand der Steuerleitung 110 (siehe Fig.1) kann die Detektorschaltung 105 den Treiber 104 so ansteuern, dass die mittlere elektrische Leistung entsprechend angepasst wird. Wird beispielsweise der Kondensator 108 für eine Zeitdauer mittels des Schalters 107 mit dem Eingang des Treibers 104 verbunden, so wird einerseits das Flimmern verhindert, andererseits wird zusätzlich elektrische Energie dem Leuchtmittel 101 zugeführt, so dass die Helligkeit ohne weitere Maßnahme womöglich nicht genügend reduziert wird. Daher kann über die Steuerleitung 110 die Aussteuerung des Treibers 104 herabgesetzt werden, so dass die mittlere an das Leuchtmittel 101 von dem Treiber 104 abgegebene elektrische Energie reduziert wird und somit die Helligkeit des Leuchtmittels 101 trotz Zuführung zusätzlicher Energie an den Eingang des Treibers 104 gedimmt bzw. abgeschwächt werden kann. Vorzugsweise gibt es eine untere Schwelle für die größtmögliche Dimmung (d.h. die geringste einstellbare Helligkeit des Leuchtmittels 101), danach wird das Leuchtmittel 101 abgeschaltet.

Der vorgestellte Ansatz ermöglicht somit eine wirksame Helligkeitsregelung, wobei auch in Pausen der Ansteuerung ein Flimmern der gedimmten Leuchtmittel nicht von dem menschlichen Auge wahrnehmbar ist. Ein weiterer Vorteil ist es, dass die ausgangsseitig in dem Kondensator gespeicherte Energie effizienter genutzt wird, indem diese zumindest zeitweise an den Eingang des Treibers geführt wird. Damit kann dieser Kondensator um einen Faktor 10 bis 20 kleiner dimensioniert werden als in herkömmlichen Schaltungen. Somit kann z.B. ein Keramik-Kondensator eingesetzt werden, was sich vorteilhaft auf den benötigten Bauraum auswirkt.

### Bezugszeichenliste:

- 101: Leuchtmittel
- 102: Dimmer
- 103: Gleichrichter
- 104: Treiber(schaltung)
- 105: Detektorschaltung
- 106: (elektronischer) Schalter
- 107: (elektronischer) Schalter
- 108: Kondensator
- 109: Verzögerungselement
- 110: Steuerleitung

- 201: Spannungsverlauf (pulsierende Gleichspannung)
- 202: Spannungsverlauf (gedimmtes Spannungssignal)
- 203: Spannungsverlauf (gedimmtes Spannungssignal mit zusätzlichem Spannungssignal 207 innerhalb der Pause P)
- 204: ansteigende Phase
- 205: abfallende Phase
- 206: Ansteuerphase
- 207: Spannungssignal
- P: Pause
- T1: Pause
- T2: Pause

## Patentansprüche

1. Schaltung zur Ansteuerung eines Leuchtmittels (101),
- wobei die Schaltung ausgelegt ist, um einem Dimmer (102); insbesondere einem Phasenan- oder einem Phasenabschnittsdimmer, nachgeschaltet zu werden,
- bei der das Leuchtmittel mindestens ein Halbleiterleuchtelement, insbesondere mindestens eine Leuchtdiode, umfasst,
- umfassend eine Treiberschaltung (104) mit einem Eingang und einem Ausgang, wobei der Ausgang der Treiberschaltung (104) mit dem Leuchtmittel (101) verbunden ist,
- umfassend eine Detektorschaltung (105), anhand derer abhängig von einem Eingangssignal der Treiberschaltung (104) ein Kondensator (108) mit dem Ausgang der Treiberschaltung (104) oder mit dem Eingang der Treiberschaltung (104) verbindbar ist,
- bei der der Kondensator (108) während einer Pause (P) des Eingangssignals der Treiberschaltung (104) für eine vorgegebene Zeitdauer (207) insbesondere um die Mitte der Pause mit dem Eingang der Treiberschaltung verbindbar ist,
- bei der der Eingang des Treibers (104) mit dem Ausgang eines Gleichrichters (103) verbunden ist und dem Gleichrichter (103) insbesondere der Dimmer (102) vorgeschaltet ist.

2. Schaltung nach Anspruch 1, bei der die Treiberschaltung einen Schaltregler oder einen Hochsetzer, insbesondere einen SEPIC-Wandler aufweist.

3. Schaltung nach einem der vorhergehenden Ansprüche, bei der die Detektorschaltung den Kondensator mit dem Ausgang der Treiberschaltung oder mit dem Eingang der Treiberschaltung mittels zweier steuerbarer elektronischer Schalter (106, 107) verbindet.

4. Schaltung nach Anspruch 3, bei der der elektronische Schalter (106, 107) eines der folgenden Bauelemente aufweist:
- einen Halbleiterschalter,
- einen Transistor,
- einen Feldeffekttransistor,
- einen Mosfet,
- einen BiCMOS-Schalter,
- einen IGBT.

5. Schaltung nach einem der vorhergehenden Ansprüche, bei der der Kondensator (108) ein Keramik-Kondensator ist.

6. Schaltung nach einem der vorhergehenden Ansprüche, bei der anhand der Detektorschaltung (105) die Dauer der Pause (P) ermittelbar ist.

7. Schaltung nach einem der vorhergehenden Ansprüche, bei der die Detektorschaltung (105) eine Aussteuerung des Treibers (104) ansteuert.

8. Schaltung nach Anspruch 7, bei der die Detektorschaltung die Aussteuerung des Treibers reduziert, wenn der Kondensator mit dem Eingang der Treiberschaltung verbunden ist.

9. Verfahren zum Ansteuern mindestens eines Halbleiterleuchtelements über einen Phasenan- bzw. Phasenabschnittsdimmer,
- bei dem eine Treiberschaltung einen Eingang und einen Ausgang aufweist, wobei der Ausgang der Treiberschaltung mit dem Leuchtmittel verbunden ist,
- bei dem abhängig von einem Eingangssignal der Treiberschaltung ein Kondensator mit dem Ausgang der Treiberschaltung oder mit dem Eingang der Treiberschaltung verbunden wird,
- bei dem eine Pause des Eingangssignals der Treiberschaltung detektiert wird und
- bei dem zumindest vorübergehend während der Pause, insbesondere um die Mitte der Pause, der Kondensator mit dem Eingang der Treiberschaltung verbunden wird.

10. Leuchte oder Lampe umfassend eine Schaltung gemäß einem der Ansprüche 1 bis 8.

## Claims

1. Circuit for driving a luminous means (101),
- wherein the circuit is designed to be connected downstream of a dimmer (102), in particular a phase-gating or phase-chopping dimmer,
- wherein the luminous means comprises at least one semiconductor luminous element, in particular at least one light-emitting diode,
- comprising a driver circuit (104) having an input and an output, wherein the output of the driver circuit (104) is connected to the luminous means (101),
- comprising a detector circuit (105), on the basis of which, depending on an input signal of the driver circuit (104), a capacitor (108) can be connected to the output of the driver circuit (104) or to the input of the driver circuit (104),
- wherein the capacitor (108) can be connected to the input of the driver circuit during a pause (P) of the input signal of the driver circuit (104) for a predefined time duration (207), in particular around the middle of the pause,
- wherein the input of the driver (104) is connected to the output of a rectifier (103) and, in particular, the dimmer (102) is connected upstream of the rectifier (103).

2. Circuit according to Claim 1, wherein the driver circuit has a switching regulator or a step-up converter, in particular an SEPIC converter.

3. Circuit according to either of the preceding claims, wherein the detector circuit connects the capacitor to the output of the driver circuit or to the input of the driver circuit by means of two controllable electronic switches (106, 107).

4. Circuit according to Claim 3, wherein the electronic switch (106, 107) comprises one of the following components:
- a semiconductor switch,
- a transistor,
- a field effect transistor,
- a MOSFET,
- a BiCMOS switch,
- an IGBT.

5. Circuit according to any of the preceding claims, wherein the capacitor (108) is a ceramic capacitor.

6. Circuit according to any of the preceding claims, wherein the duration of the pause (P) can be determined with the aid of the detector circuit (105).

7. Circuit according to any of the preceding claims, wherein the detector circuit (105) drives a modulation of the driver (104).

8. Circuit according to Claim 7, wherein the detector circuit reduces the modulation of the driver if the capacitor is connected to the input of the driver circuit.

9. Method for driving at least one semiconductor luminous element via a phase-gating or phase-chopping dimmer,
- wherein a driver circuit has an input and an output, wherein the output of the driver circuit is connected to the luminous means,
- wherein a capacitor is connected to the output of the driver circuit or to the input of the driver circuit depending on an input signal of the driver circuit,
- wherein a pause of the input signal of the driver circuit is detected, and
- wherein the capacitor is connected to the input of the driver circuit at least temporarily during the pause, in particular around the middle of the pause.

10. Luminaire or a lamp comprising a circuit according to any of Claims 1 to 8.

## Revendications

1. Circuit pour commander un moyen d'éclairage (101),
- le circuit étant conçu pour être monté à la suite d'un variateur de lumière (102), en particulier d'un variateur de lumière à entrée de phase ou à sortie de phase,
- dans lequel le moyen d'éclairage comprend au moins un élément d'éclairage à semi-conducteur, en particulier au moins une diode électroluminescente,
- comprenant un circuit d'attaque (104) présentant une entrée et une sortie, la sortie du circuit d'attaque (104) étant connectée au moyen d'éclairage (101),
- comprenant un circuit détecteur (105), permettant de connecter un condensateur (108) à la sortie du circuit d'attaque (104) ou à l'entrée du circuit d'attaque (104) en fonction d'un signal d'entrée du circuit d'attaque (104),
- dans lequel le condensateur (108) peut être connecté à l'entrée du circuit d'attaque (104) pour une durée prédéterminée (207) pendant une pause (P) du signal d'entrée du circuit d'attaque (104), en particulier vers le milieu de la pause,
- dans lequel l'entrée du circuit d'attaque (104) est connectée à la sortie d'un redresseur (103) et le redresseur (103) est notamment précédé du variateur de lumière (102).

2. Circuit selon la revendication 1, dans lequel le circuit d'attaque comprend un régulateur à commutation ou un élévateur, en particulier un convertisseur SEPIC.

3. Circuit selon l'une des revendications précédentes, dans lequel le circuit détecteur connecte le condensateur à la sortie du circuit d'attaque ou à l'entrée du circuit d'attaque au moyen de deux commutateurs électroniques (106, 107) pouvant être commandés.

4. Circuit selon la revendication 3, dans lequel le commutateur électronique (106, 107) présente l'un des composants suivantes :
- un commutateur à semi-conducteur,
- un transistor,
- un transistor à effet de champ,
- un MOSFET,
- un commutateur BiCMOS,
- un IGBT.

5. Circuit selon l'une des revendications précédentes, dans lequel le condensateur (108) est un condensateur céramique.

6. Circuit selon l'une des revendications précédentes, dans lequel le circuit détecteur (105) permet de détecter la durée de la pause (P).

7. Circuit selon l'une des revendications précédentes, dans lequel le circuit détecteur (105) commande un contrôle de niveau du circuit d'attaque (104).

8. Circuit selon la revendication 7, dans lequel le circuit détecteur réduit la commande de niveau du circuit d'attaque quand le condensateur est connecté à l'entrée du circuit d'attaque.

9. Procédé pour commander au moins un élément d'éclairage à semi-conducteur par l'intermédiaire d'un variateur de lumière à retard de phase ou à coupure de phase,
- dans lequel un circuit d'attaque présente une entrée et une sortie, la sortie du circuit d'attaque étant connectée au moyen d'éclairage,
- dans lequel un condensateur est connecté à la sortie du circuit d'attaque ou à l'entrée du circuit d'attaque en fonction d'un signal d'entrée du circuit d'attaque,
- dans lequel une pause du signal d'entrée du circuit d'attaque est détectée, et
- dans lequel le condensateur est connecté à l'entrée du circuit d'attaque au moins temporairement pendant la pause, en particulier vers le milieu de la pause.

10. Luminaire ou lampe comprenant un circuit selon l'une des revendications 1 à 8.
